# EUROPEAN PATENT SPECIFICATION

(11) **EP 1 401 176 B1**
(45) Date of publication and mention of the grant of the patent: **14.11.2007**
(21) Application number: 03021241.9
(22) Date of filing: 18.09.2003
(51) Int. Cl.: H04L 29/08, H04L 12/58, H04Q 7/22, G06F 17/30

(54) **Connection detection of a device through a relay device and transmission of information to that device**
Verbindungsfeststellung eines Geräts durch ein Zwischengerät und Informationsübermittlung an dieses Gerät
Détection de la connexion d'un terminal via un appareil-relais et transmission d'informations à ce terminal

(30) Priority: 18.09.2002 JP 2002271966
(43) Date of publication of application: 24.03.2004
(73) Proprietor: NTT DoCoMo, Inc., Tokyo 100-6150 (JP)
(72) Inventor: Saigo, Satoru NTT DoCoMo, Inc. Int.Prop.Dept., Chiyoda-ku, Tokyo 100-6150 (JP); Miura, Fumiaki NTT DoCoMo, Inc. Int.Prop.Dept., Chiyoda-ku, Tokyo 100-6150 (JP)
(74) Representative: GROSSE BOCKHORNI SCHUMACHER

(56) References cited:
- EP-A- 1 102 443
- WO-A-01/76280
- WO-A-02/067544
- US-A- 6 058 303
- US-A1- 2002 061 021
- EBERSPÄCHER J.; VÖGEL H.-J.: 'GSM, Global System for Mobile Communication passage' GLOBAL SYSTEM FOR MOBILE COMMUNICATION 1997, pages 228 - 244, XP002332836

## Description

### BACKGROUND OF THE INVENTION

### Field of the Invention

The present invention relates to a relay device, an information transmission device, and an information transmission method.

### Related Background Art

Distribution of services (information distribution) provided through a network can be classified into two types, that is, a pull type and a push type. The service distribution of the pull type is a distribution method by which a user requests information through web browsing, file downloading or the like (for example, see Non-patent Literature 1) . On the other hand, the service distribution of the push type is a distribution method by which a user passively receive information through mail distribution or the like (for example, see Non-patent Literature 1). Because of such a difference in the information distribution methods, a network to provide information must be previously established in the case of service distribution of the pull type, while a network to provide information is not necessarily previously established in the case of service distribution of the push type.

### [Non-patent Literature 1]

Satoshi Yamato, "What is push type information distribution?: FUNDAMENTAL KNOWLEDGE OF TERMS FOR MOBILE DEVICES, No. 79," at http://k-tai.impress.co.jp/cda/article/keyword/0,,8083, 00.html, Feb. 5, 2002, (retrieved on Sep. 12, 2002).

In case of the push type service distribution, since the network to provide information is not necessarily previously established, information provision may not be successful when an information provider distributes information, because the network cannot be established for some reason. Two methods have been employed to deal with this problem of information distribution failure.

The first method of push type service distribution may be used when a client terminal used by the user periodically connects to a network to request information from the information provider (a service provider), thus substantially employing a method of the pull type service distribution. The secondmethod is for the service provider provides information repeatedly until the information reaches the client terminal, which means the push type service distribution must be done continuously.

In the case of the first method, the client terminals need to periodically transmit confirmation messages to the service provider to inquire whether there are undelivered services. Transmitting such confirmation messages increases the users' communication costs, and at the same time becomes a load on the network band. Moreover, the service provider needs to deal with the confirmation messages transmitted from the client terminals, which is unsuitable when there are a large number of such target client terminals. In the case of the second method, since the information needs to be continuously transmitted until all the client terminal have connected to the network, this traffic becomes a load on the network band, and increases the service provider's communication costs.
The document by J. EBERSPÄCHER; H.-J. VÖGEL: "GSM, Global System for Mobile Communication passage" GLOBAL SYSTEM FOR MOBILE COMMUNICATION, 1997, pages 228-244, XP002332836 discloses a relay device. The relay device is part of a mobile network and comprises connection detection means to detect a mobile device and to acquire transmission related information required to transmit information to the mobile device.

### SUMMARY OF THE INVENTION

Thus, objects of the present invention are to provide a relay device, according to independent claim 1, and an information transmission method according to independent claim 2, that can provide push type services suited to a network and a network users.

A relay device according to the present invention includes connection detection means for detecting a client terminal that can transmit/receive information through a network that is in a communicable state with the network.

The relay device of the present invention detects a client terminal that is in a communicable state. Therefore, for example, by transmitting notification of such a detection to a device such as an information transmission device, the information transmission device can transmit undelivered information to the client terminal. Thus, the information transmission device does not transmit undelivered information when the client terminals are not in a communicable state, and therefore it is possible to avoid a situation in which information needs to be continuously transmitted until the client terminal connects to the network. Moreover, since the client terminal does not need to ask for the undelivered information to be transmitted, the load on the network band is reduced and communication costs reduced.

Furthermore, the relay device of the present invention in which the connection detection means acquires transmission-related information required to transmit information to the client terminal, and the relay device further comprises notification transmission means for transmitting results from the connection detection means and the acquired transmission-related information to an information transmission device for transmitting undelivered information to the client terminal. Then, for example, if transmission-related information such as an IP address of the client terminal is obtained and the obtained transmission-related information is outputted to the information transmission device, the undelivered information can be transmitted to the client terminal more efficiently.

Furthermore, the relay device of the present invention comprises information transmission means (RD (Relay Device)) for transmitting the undelivered information to the client terminal, provided that the connection detection means detects the client terminal is in a communicable state with the network. Then, the undelivered information will not be transmitted when the client terminal are not in a communicable state. Accordingly, it is possible to avoid continuously transmitting information, until the client terminal connects to the network.

Furthermore, the relay device of the present invention in which the information transmission means (RD) selects undelivered information to be transmitted to the client terminal from information stored in transmission information storage means, provided that the connection detection means detects the client terminal is in a communicable state with the network, and transmits the selected undelivered information to the client terminal. Then, for example, if there is undelivered information stored as undelivered services in the transmission information storage means, it is possible to efficiently transmit the undelivered information when the client terminal connects to the network.

Furthermore, the relay device of the present invention in which the information transmission means (RD) transmits the selected undelivered information to the client terminal together with other information transmitted to the client terminal . If the other information can be transmitted, the client terminal is in the communicable state with the network. Then, the undelivered information can be transmitted more efficiently since

Furthermore, the relay device of the present invention in which the other information transmitted to the client terminal is information transmitted/received by use of HTTP; and the information transmissionmeans (RD) adds the selected undelivered information by changing the HTTP header of the other information transmitted to the client terminal, and transmits the selected undelivered information to the client terminal. Then, the undelivered information can be transmitted to the client terminal together with the other information by so-called a piggyback system. Thus, it is possible to transmit the undelivered information to the client terminal more simply.

Furthermore, the relay device of the present invention in which the information transmission means (RD) transmits the selected undelivered information to the client terminal separately from the other information transmitted to the client terminal. Then, the undelivered information can be transmitted at an appropriate. For example, when a mobile phone as the client terminal is used to make a call, the connection detection means detects the call and enables to transmit mail information as undelivered information to the mobile phone separately from the voice information.

The information transmission device of the present invention includes notification reception means for receiving notification concerning detection of a client terminal which can transmit/receive information through a network is in a communicable state with the network; and information transmission means (ITD (Information Transmission Device)) for transmitting undelivered information to the client terminal, provided that the notification reception means receives the notification.

In the information transmission device of the present invention, the information transmission means (ITD) receives resul ts that a client terminal is in a communicable state, and transmits undelivered information to the client terminal. Thus, the information transmission device does not transmit undelivered information when the client terminal are not in a communicable state, and therefore it is possible to avoid a situation in which information needs to be continuously transmitted until the client terminal connects to the network. Moreover, since the client terminal does not need to ask for the undelivered information to be transmitted, the load on the network band is reduced and communication costs reduced.

Furthermore, the information transmission device of the present invention in which the information transmission means (ITD) selects undelivered information to be transmitted to the cl ient terminal from information stored in transmission information storage means, provided that the connection detection means detects the client terminal is in a communicable state with the network, and transmits the selected undelivered information to the client terminal . Then, for example, if there is undelivered information stored as undelivered services in the transmission information storage means, it is possible to efficiently transmit the undelivered information when the client terminal connects to the network.

Furthermore, the information transmission device of the present invention in which the notification reception means receives transmission-related information required to transmit information to the client terminal; and the information transmission means (ITD) transmits the undelivered information to the client terminal, provided that the notification reception means receives the transmission-related information. Then, for example, if transmission-related information such as an IP address of the client terminal is obtained and the obtained transmission-related information is outputted to the information transmission device, the undelivered information can be transmitted to the client terminal more efficiently.

The information transmission method of the present invention includes a connection detection step of detecting, by use of connection detection means, that a client terminal which can transmit/receive information through a network is in a communicable state with the network; and an information transmission step of transmitting, by use of information transmission means, undelivered information to the client terminal, provided that the connection detection means detects the client terminal is in a communicable state with the network.

According to the information transmission method of the present invention, the information transmission means receives results that a client terminal is in a communicable state, and transmits undelivered information to the client terminal. Thus, the information transmission device does not transmit undelivered information when the client terminal are not in a communicable state, and therefore it is possible to avoid a situation in which information needs to be continuously transmitted until the client terminal connects to the network. Moreover, since the client terminal does not need to ask for the undelivered information to be transmitted, the load on the network band is reduced and communication costs reduced.

Furthermore, the information transmission method of the present invention in which, in the information transmission step, the information transmission means selects undelivered information to be transmitted to the client terminal from information stored in transmission information storage means, provided that the connection detection means detects the client terminal is in a communicable state with the network, and transmits the selected undelivered information to the client terminal. Then, for example, if there is undelivered information stored as undelivered services in the transmission information storage means, it is possible to efficiently transmit the undelivered information when the client terminal connects to the network.

Furthermore, the information transmission method of the present invention in which, in the information transmission step, the information transmission means transmits the selectedundelivered information to the client terminal together with other information transmitted to the client terminal. If the other information can be transmitted, the client terminal is in the communicable state with the network. Then, the undelivered information can be transmitted more efficiently since

Furthermore, the information transmission method of the present invention in which the other information transmitted to the client terminal is information transmitted/received by use of HTTP, and in the information transmission step, the information transmission means adds the selected undelivered information by changing the HTTP header of the other information transmitted to the client terminal, and transmits the selected undelivered information to the client terminal. Then, the undelivered information can be transmitted to the client terminal together with the other information by a so-called piggyback system. Thus, it is possible to transmit the undelivered information to the client terminal more simply.

Furthermore, the information transmission method of the present invention in which, in the information transmission step, the information transmission means transmits the selected undelivered information to the client terminal separately from the other information transmitted to the client terminal. Then, the undelivered information can be transmitted at an appropriate. For example, when a mobile phone as the client terminal is used to make a call, the connection detection means detects the call and enables to transmit mail information as undelivered information to the mobile phone separately from the voice information.

Furthermore, the information transmission method of the present invention in which further comprising an information acquiring step of acquiring, by use of the connection detection means, transmission-related information required to transmit information to the client terminal; and an information output step of outputting, by use of the connection detection means, the acquired transmission-related information to the information transmission means. Then, for example, if transmission-related information such as an IP address of the client terminal is obtained and the obtained transmission-related information is outputted to the information transmission device, the undelivered information can be transmitted to the client terminal more efficiently.
The present invention will become more fully understood from the detailed description given hereinbelow and the accompanying drawings which are given by way of illustration only, and thus are not to be considered as limiting the present invention.
Further scope of applicability of the present invention will become apparent from the detailed description given hereinafter. However, it should be understood that the detailed description and specific examples, while indicating preferred embodiments of theinvention,are given by way of illustration only.

### BRIEF DESCRIPTION OF THE DRAWINGS

Fig. 1 is a view explaining a mail server and a relay device according to an embodiment of the present invention.
Fig. 2 is a sequence diagram showing a method for transmitting mail information using the mail server and the relay device of an embodiment of the present invention.
Fig. 3 is a sequence diagram showing a method for transmitting mail information using the mail server and the relay device of an embodiment of the present invention.
Fig. 4 is a diagram showing a mode oC transmitting information by the replay device of an embodiment of the present invention.

### DESCRIPTION OF THE PREFERRED EMBODIMENTS

Findings of the present invention can be easily understood by considering the following detailed description with reference to the attached drawings, which are shown only for the purpose of illustration . Hereinafter, the preferred embodiments of the present invention will be described by referring to the attached drawings. Explanations for the corresponding parts in the drawings will not be repeated by applying the same reference numerals, if applicable. If applicable, the same reference numerals will be applied to the corresponding parts in the drawings and the explanations for these corresponding parts will not be repeated.

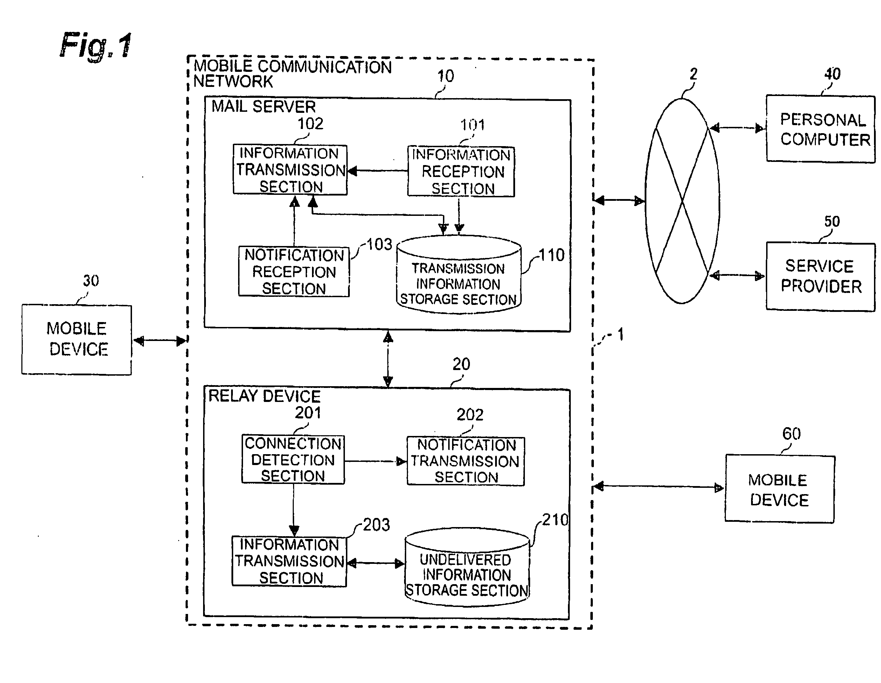

Description will be made for a mail server and a relay device according to an embodiment of the present invention. Fig. 1 is a view explaining the mail server and the relay device. Themail server 10 and the relay device 20 constitute parts of a mobile communication network 1. The mobile communication network 1 is constituted to enable the transmission/reception of information between mobile devices 30 and 60. The mobile communication network 1 is further constituted to enable the transmission/reception of information between a personal computer 40 and a service provider terminal 50.

The mobile devices 30 and 60 are mobile phones equipped with data communication functions. For the mobile devices 30 and 60, mobile information terminals such as PDAs (Personal Digital Assistants) having communication functions are also applicable instead of mobile phones, and large variety of other devices for which information communications are also applicable.

The personal computer 40 is constituted as a computer system which physically comprises a CPU (Central Processing Unit), a memory, an input device such as a mouse or keyboard, a display unit, a storage device such as a hard disk, a communication device such as a modem, etc. In this embodiment, the personal computer 40 is used as a terminal to transmit a mail to the mobile device 30.

The service provider terminal 50 is constituted as a computer system which physically comprises a CPU (Central Processing Unit), a memory, an input device such as a mouse or a keyboard, a display unit, a storage device such as a hard disk, a communication device such as a modem, etc. In this embodiment, the service provider terminal 50 is used as a terminal to provide services such as information transmission to users of the mobile devices 30 and 60.

The mail server 10 comprises a computer system (or a collection of computer systems) which physically comprises a CPU (Central Processing Unit), a memory, an input device such as a mouse or a keyboard, a display unit, a storage device such as a hard disk, etc.

The mail server 10 includes as functional components an information reception section 101, an information transmission section (information transmission means) 102, a notification reception section (notification reception means) 103, and a transmission information storage section (transmission information storage means) 110. Next, each component will be described in detail.

The information reception section 101 receives mail information transmitted to the mobile device which can transmit/receive information through the mobile communication network 1. For example, information reception section 101 receives mail information transmitted from the personal computer 40 to the mobile device 30 through Internet 2. The information reception section 101 outputs the received mail information to the information transmission section 102, while storing it in the transmission information storage section 110.

The information transmission section 102 transmits mail information to the mobile device, that can transmit/receive information through the mobile communication network 1. The information transmission section 102 may transmit the mail information either when it is received from the information reception section 101, or in accordance with the output of detection information received from the notification reception section 103 as described later. When the mail information is transmitted in accordance with the output of the detection information received from the notification reception section 103, the information transmission section 102 reads the mail information stored in the transmission information storage section 110 and transmits it.

The notification reception section 103 receives detection information transmitted from relay device 20. The detection information indicates that relay device 20 has detected a mobile device that can transmit/receive information through the mobile communication network 1 is able to communicate with the mobile communication network 1. The notification reception section 103 outputs the received detection information it has received to the information transmission section 102.

The transmission information storage section 110 stores mail information transmitted to each of the mobile devices that can transfer information through the mobile communication network 1. The transmission information storage section 110may store all, mail information received by the information reception section 101, or only the mail information which the information transmission section 102 has tried to transmit but failed. The mail information stored in the transmission information storage section 110 is erased in a predetermined manner. For example, when transmitting mail information to the mobile device 30, this predetermined manner may be when the mobile device 30 returns a message indicating the mail has been received. If such a mail received response is not returned, the corresponding mail information is stored. The stored mail information is transmitted by the information transmission section 102 the next time the mobile device 30 is in communication with the network.

The relay device 20 comprises a computer system which physically comprises, a CPU (Central Processing Unit), as a memory, an input device such a mouse or a keyboard, a display unit, a storage device such as a hard disk etc

The relay device 20 includes a connection detection section (connection detection means) 201, a notification transmission section (notification transmission means) 202, an information transmission section (information transmission means) 203, and an undelivered information storage section (transmission information storage means) 210 as functional components. Next, each component will be described in detail.

The connection detection section 201 detects that the mobile device that can transmit/receive information through the mobile communication network 1 that is able to in communicate with mobile communication network 1. For example, the connection detection section 201 detects calls from mobile device 30 to mobile device 60, requests from mobile device 30 for pull type services (web browsing or the like) from service provider terminal 50, or the allocation of an IP address to the mobile device 30, and thus determines that the mobile device 30 is able to communicate with mobile communication network 1. The connection detection section 201 outputs the detection result to notification transmission section 202 and information transmission section 203.

Notification transmission section 202 transmits the information obtained from the connection detection section to mail server 10. More specifically, the notification transmission section 202 transmits the detection information together with information specifying the mobile device that has become communicable with the mobile communication network 1.

The information transmission section 203 selects information to be transmitted to the mobile device that has become communicable with the mobile communication network 1 from the information stored in the undelivered information storage section 210 in accordance with the detection result of the connection detection section 201, and transmits the selected information. The undelivered information storage section 210 stores, for example, mail information that mail server 10 has tried to transmit to mobile device 30 but failed, push information transmitted from the service provider terminal 50 to the mobile device 30 and the like, together with information specifying the mobile device 30 as a recipient. The information stored in the undelivered information storage section 210 is erased in a predetermined manner. For example, when transmitting mail information to the mobile device 30, this predetermined manner may be when the mobile device 30 returns a message indicating the mail has been received. If such a mail received response is not returned, the corresponding mail information stored. The stored mail information is transmitted by the information transmission section 203 the next time the mobile device 30 becomes communicable.

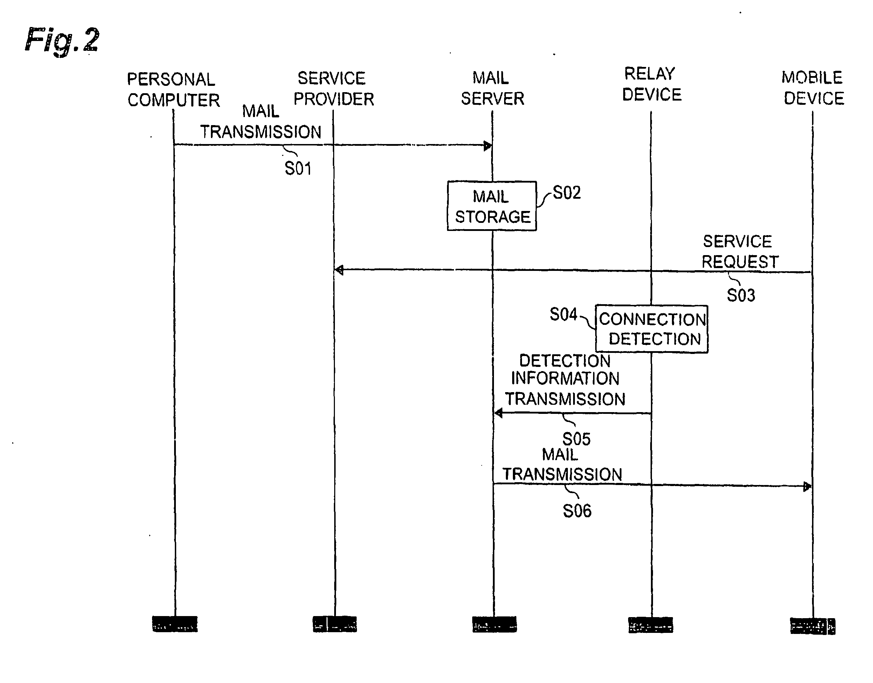

Next, a method for transmitting mail information by use of the mail server 10 and the relay device 20 will be describes with reference to Fig.2. A mail sender who intends to transmit mail to the mobile device 30 transmits mail information from the personal computer 40 (S01) . This mail information reaches the mobile communication network 1 through the Internet 2. The main information that has reached the mobile communication network 1 is received by the information reception section 101 in the mail server 10, and stored in the transmission information storage section 110 (S02). In this description, it is assumed that the information reception section 101 outputs the mail information to information transmission section 102, and the information transmission section 102 tries but fails to transmit the mail information to mobile device 30.

The user of a mobile device 30 requests pull type services from the service provider terminal 50 (S03). When the mobile device 30 requests the pull type services, that is, by web browsing or the like, the mobile device 30 is set in a communicable state with the mobile communication network 1. The connection detection section 20 in relay device 20 detects this communicable state (S04).

A result of the detection by the connection detection section 201 is outputted to notification transmission section 202, and transmitted from notification transmission section 202 to the mail server 10 (S05). The notification receiving section 103 in mail server 10 receives the detection information, and outputs it to the information transmission section 102. Since the detection information specifies the mobile device 30, the information transmission section 102 selects information to be transmitted to mobile device 30 from the information stored in the transmission information storage section 110. The information transmission section 102 transmits the selected information (for example, mail information which has not been transmitted) to mobile device 30 (S06).

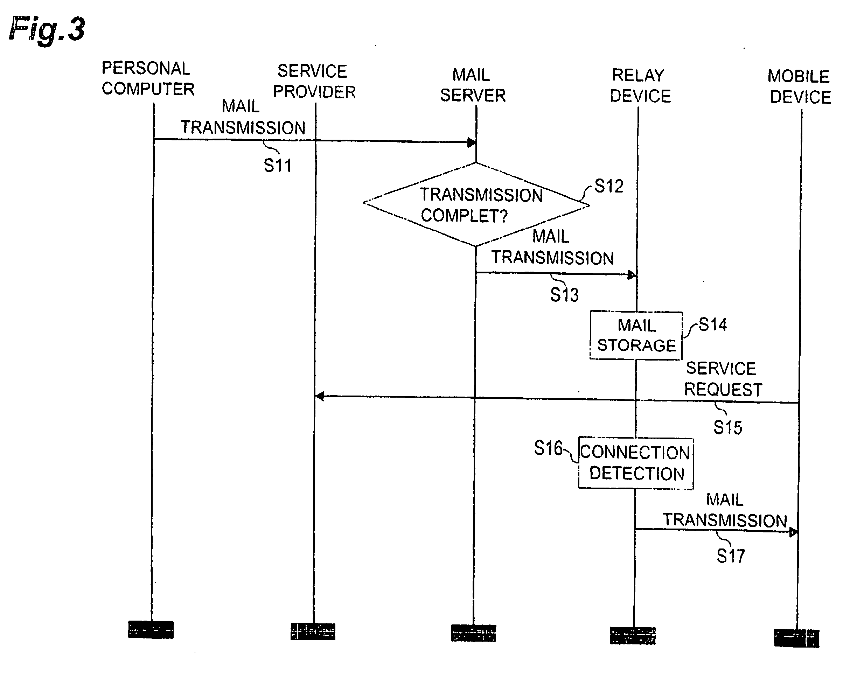

Next, another method for transmitting mail information by use of the mail server 10 and the relay device 20 will be descruibed with reference to Fig. 3. A mail sender who intends to transmit mail to mobile device 30 transmits mail information from the personal computer 40 (S11). This mail information reaches the mobile communication network 1 through the Internet 2. The mail information that has reached the mobile communication network 1 is received by the information reception section 101 in mail server 10, and outputted to the information transmission section 101. The information transmission section 102 transmits the mail information to the mobile device 30. Here, the information transmission section 101 determines whether the transmitting of the mail information has been completed (S12). The information transmission section 101 transmits the mail information to the relay device 20 if it determines that the transmission of the mail information has not been received (S13).

The mail information transmitted by the information transmission section 101 to the relay device 20 is stored in the undelivered information storage section 210 (S14). The user of mobile device 30 requests pull type services from the service provider terminal 50 (S15). When the mobile device 30 requests the pull type services, that is, by web browsing or the like, the mobile device 30 is set in a communicable state with mobile communication network 1. The connection detection section 201 in relay device 20 detects the setting of this communicable state (S16) .

Since the detection information specifies mobile device 30, the information transmission section 203 in the relay device 20 selects information to be transmitted to the mobile device 30 from the information stored in the undelivered information storage section 210. The information transmission section 203 transmits the selected information (for example, mail information which has not been transmitted) to mobile device 30 (S17).

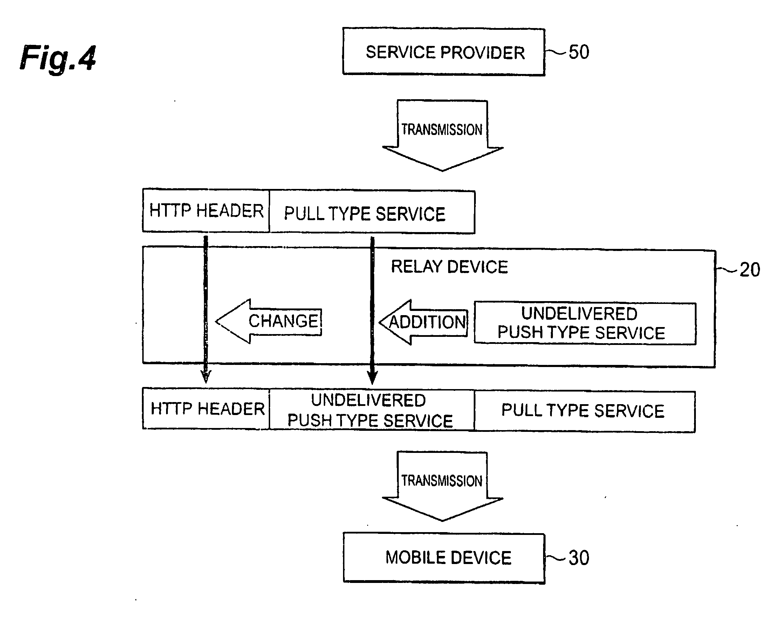

In the foregoing description, the undelivered mail information or like was transmitted alone by either mail server 10 or relay device 20. However, such information may be transmitted together with other information. Fig. 4 shows a method for transmitting undelivered information together with other information. According to the method of Fig. 4, when mobile device 30 requests pull type services from service provider terminal 50, pull type services (for example, information of web browsing) having an HTTP header are transmitted from service provider terminal 50 . The pull type services having the HTTP header are transmistted to relay device 20 in the mobile communication network 1 . Relay device 20 changes the HTTP header received into the HTTP header containing undelivered information, adds the undelivered information to the pull type services, and then transmits the services to mobile device 30.

According to the embodiment, since the connection detection section 201 detects mobile device 30 has been set in the communicable state, and information transmission section 102 in mail server 10 or information transmission section 203 in relay device 20 transmits undelivered information such as mail information to mobile device 30 in accordance with the detection, no mail information is transmitted when mobile communication network 1 and the mobile device 30 are not in a communicable state with each other. Thus, it is possible to avoid the situation in which information needs to be continuously transmitted to mobile communication network 1 until the mobile device 30 connects to mobile communication network 1. Moreover, a client terminal does not need to request that the undelivered information to be transmitted, and the load on the network band is reduced.

When connection detection section 201 detects connection, information transmission section 102 or the information transmission section 203 selects mail information to be transmitted to mobile device 30 from the undelivered information stored in transmission information storage section 110 in mail server 10 or undelivered information storage section 210 in relay device 20 and transmits the selected information. Thus, it is possible to efficiently transmit mail information when mobile device 30 connects to mobile communication network 1.

If information transmission section 203 transmits undelivered information together with other information to be transmitted to mobile device 30, undelivered information can be transmitted more efficiently since mobile device 30 is in the communicable state with mobile communication network 1. Especially, if the undelivered information is added to information transmitted/received by use of HTTP by changing the HTTP header, and transmitted to the mobile device 30, the non-transmitted information can be transmitted to the mobile device 30 by a so-called piggyback system. Thus, the undelivered information can be transmitted to mobile device 30 more easily. On the other hand, if the undelivered information is transmitted separately from the other information to be transmitted to mobile device 30, it is possible to transmit the undelivered information at an appropriate time.

Furthermore, if connection detection section 201 acquires information required to transmit information to mobil e device 30, and outputs that information to information transmission section 102 or information transmission section 203, the undelivered information can be transmitted to mobile device 30 more efficiently.

According to the present invention, client terminals are detected when they are in the communicable state, and the undelivered information is transmitted to the client terminal in accordance with the detection, the undelivered information is not transmitted when the client terminal are not set in a communicable state. Thus, it is possible to avoid a situation where information needs to be continuously transmitted until the client terminal connects to the network.

## Claims

1. A relay device (20) comprising:
connection detection means (201) for detecting that a mobile device (30, 60) which can transmit/receive information through a mobile communication network (1) is in a communicable state with the network
such that,
the relay device (20) constitutes part of the mobile communication network (1) and that the connection detection means (201) are for acquiring transmission related information required to transmit information to a mobile device (30, 60); the relay device further comprising notification transmission means (202) for transmitting a detected result from the connection detection means (201) and the acquired transmission related information to an information transmission device (10) for transmitting undelivered information to the mobile device (30, 60); and
information transmission means (203) for transmitting an undelivered information to the mobile device (30, 60), provided that it has been detected by a connection detection means (201) that the mobile device (30, 60), is in a communicable state with the network;
wherein the information transmission means (203) is adapted to select undelivered information to be transmitted to the mobile device (30, 60) from information stored in transmission information storage means, provided that it has been detected by the connection detection means (201) that the mobile device (30, 60) is in a communicable state with the network, is adapted to add the selected undelivered information by changing an HTTP header of other information to be transmitted to the mobile device (30, 60) by use of HTTP, and is adapted to transmit the selected undelivered information to the mobile device (30, 60) together with the other information to be transmitted to the mobile device (30, 60).

2. An information transmission method comprising:
a connection detection step (504, S16) of detecting, by use of connection detection means (201), that a mobile device (30, 60) which can transmit/receive information through a mobile communication network (1) is in a communicable state with the mobile communication network (1);
an information transmission step of transmitting, by use of information transmission means (203), undelivered information to the mobile device (30, 60), provided that the connection detection means (201) detects the mobile device (30, 60) is in a communicable state with the mobile communication network (1),
further comprising
a notification transmission step carried out by notification transmission means (202), of transmitting results from the connection detection step and transmission related information required to transmit information to the mobile device (30, 60), acquired by the connection detection means, to an information transmission device (10) for transmitting undelivered information to the mobile device (30, 60);
an information transmission step carried out by information transmission means (203) of the relay device (20), of selecting undelivered information to be transmitted to the mobile device (30, 60) from information stored in transmission information storage means (110), provided that it has been detected by the connection detection means (201) that the mobile device (30, 60) is in a communicable state with the network, adding the selected undelivered information by changing an HTTP header of other information to be transmitted to the mobile device (30, 60) by use of HTTP, and transmitting the selected undelivered information to the mobile device (30, 60) together with the other information; and
a notification reception step of receiving, by use of notification reception means (103), the detected result from the connection detection step and the transmission related information required to transmit information to the mobile device (30, 60), acquired by the connection detection means.

## Patentansprüche

1. Zwischengerät (20), aufweisend:
eine Verbindungserfassungseinrichtung (201), die erfasst, dass ein Mobilgerät (30, 60), das Information über ein Mobilkommunikationsnetz (1) senden/empfangen kann, sich in einem kommunikationsfähigen Zustand mit dem Netz befindet, derart, dass
das Zwischengerät (20) einen Teil des Mobilkommunikationsnetzes (1) bildet und dass die Verbindungserfassungseinrichtung (201) zum Ermitteln von sendebezogener Information dient, die benötigt wird, um Information zu einem Mobilgerät (30, 60) zu senden; wobei das Zwischengerät weiter eine Benachrichtigungssendeeinrichtung (201) aufweist, die ein Erfassungsergebnis von der Verbindungserfassungseinrichtung (201) und die ermittelte sendebezogene Information an ein Informationsübermittlungsgerät (10) sendet, um nicht-zugestellte Information an das Mobilgerät (30, 60) zu senden; und eine Informationssendeeinrichtung (203), die eine nicht-zugestellte Information an das Mobilgerät (30, 60) sendet, vorausgesetzt, dass von einer Verbindungserfassungseinrichtung (201) erfasst wurde, dass sich das Mobilgerät (30, 60) in einem kommunikationsfähigen Zustand mit dem Netz befindet;
wobei die Informationssendeeinrichtung (203) ausgebildet ist, um nicht-zugestellte Information, die an das Mobilgerät (30, 60) gesendet werden soll, aus Information auszuwählen, die in einer Sendeinformationsspeichereinrichtung gespeichert ist, vorausgesetzt, dass von der Verbindungserfassungseinrichtung (201) erfasst wurde, dass sich das Mobilgerät (30, 60) in einem kommunikationsfähigen Zustand mit dem Netz befindet, sie ausgebildet ist, die ausgewählte nicht-zugestellte Information hinzuzufügen, und zwar durch Ändern eines HTTP-Headers von weiterer Information, die an das Mobilgerät (30, 60) unter Verwendung von HTTP zu senden ist, und sie ausgebildet ist, die ausgewählte nicht-zugestellte Information an das Mobilgerät (30, 60) gemeinsam mit der weiteren an das Mobilgerät (30, 60) zu sendenden Information zu senden.

2. Informationssendeverfahren, aufweisend:
einen Verbindungserfassungsschritt (S04, S 16), bei dem unter Verwendung einer Verbindungserfassungseinrichtung (201) erfasst wird, dass ein Mobilgerät (30, 60), das Information über ein Mobilkommunikationsnetz (1) senden/empfangen kann, sich in einem kommunikationsfähigen Zustand mit dem Mobilkommunikationsnetz (1) befindet;
einen Informationssendeschritt, bei dem unter Verwendung einer Informationssendeeinrichtung (203) nicht-zugestellte Information an das Mobilgerät (30, 60) gesendet wird, vorausgesetzt, dass die Verbindungserfassungseinrichtung (201) erfasst, dass sich das Mobilgerät (30, 60) in einem kommunikationsfähigen Zustand mit dem Mobilkommunikationsnetz (1) befindet, weiter aufweisend
einen Benachrichtigungssendeschritt, der durch die Benachrichtigungssendeeinrichtung (201) ausgeführt wird und bei dem Ergebnisse vom Verbindungserfassungsschritt und sendebezogene Information, die benötigt wird, um Information an das Mobilgerät (30, 60) zu senden und die von der Verbindungserfassungseinrichtung ermittelt wurde, an eine Informationssendeeinrichtung (10) gesendet wird, welche nicht-zugestellte Information an das Mobilgerät (30, 60) sendet;
einen Informationssendeschritt, der durch eine Informationssendeeinrichtung (203) des Zwischengerätes (20) ausgeführt wird und bei dem nicht-zugestellte Information, die an das Mobilgerät (30, 60) zu senden ist, aus Information ausgewählt wird, die in der Sendeinformationsspeichereinrichtung (110) gespeichert ist, vorausgesetzt, dass von der Verbindungserfassungseinrichtung (201) erfasst wurde, dass sich das Mobilgerät (30, 60) in einem kommunikationsfähigen Zustand mit dem Netz befindet, die ausgewählte nicht-zugestellte Information hinzugefügt wird, und zwar durch Ändern eines HTTP-Headers weiterer Information, die an das Mobilgerät (30, 60) unter Verwendung von HTTP gesendet werden soll, und die gewählte nicht-zugestellte Information an das Mobilgerät (30, 60) gemeinsam mit der weiteren Information gesendet wird; und
einen Benachrichtigungsempfangsschritt, bei dem unter Verwendung einer Benachrichtigungsempfangseinrichtung (103) das Erfassungsergebnis vom Verbindungserfassungsschritt und die sendebezogene Information, die benötigt wird, um Information zum Mobilgerät (30, 60) zu senden und die durch die Verbindungserfassungseinrichtung ermittelt wurde, empfangen wird.

## Revendications

1. Dispositif de relais (20) comprenant :
des moyens de détection de connexion (201) pour détecter qu'un dispositif mobile (30, 60) qui peut transmettre/recevoir des informations à travers un réseau de communication mobile (1) est dans un état communicable avec le réseau,
de telle sorte que,
le dispositif de relais (20) fait partie du réseau de communication mobile (1) et les moyens de détection de connexion (201) sont pour acquérir des informations relatives aux transmissions nécessaires pour transmettre des informations à un dispositif mobile (30, 60) ; le dispositif de relais comprenant en outre des moyens de transmission de notification (202) pour transmettre un résultat détecté des moyens de détection de connexion (201) et les informations relatives aux transmissions acquises à un dispositif de transmission d'informations (10) pour transmettre des informations non livrées au dispositif mobile (30, 60) ; et
des moyens de transmission d'informations (203) pour transmettre des informations non livrées au dispositif mobile (30, 60), à condition qu'il ait été détecté par des moyens de détection de connexion (201) que le dispositif mobile (30, 60) est dans un état communicable avec le réseau ;
dans lequel les moyens de transmission d'informations (203) sont adaptés pour sélectionner des informations non livrées à transmettre au dispositif mobile (30, 60) parmi les informations stockées dans des moyens de stockage d'informations de transmission, à condition qu'il ait été détecté par les moyens de détection de connexion (201) que le dispositif mobile (30, 60) est dans un état communicable avec le réseau, est adapté pour ajouter les informations non livrées sélectionnées en changeant un en-tête HTTP d'autres informations à transmettre au dispositif mobile (30, 60) par l'utilisation de HTTP, et est adapté pour transmettre les informations non livrées sélectionnées au dispositif mobile (30, 60) avec les autres informations à transmettre au dispositif mobile (30, 60).

2. Procédé de transmission d'informations comprenant :
une étape de détection de connexion (S04, S16) consistant à détecter, par l'utilisation de moyens de détection de connexion (201), qu'un dispositif mobile (30, 60) qui peut transmettre/recevoir des informations à travers un réseau de communication mobile (1) est dans un état communicable avec le réseau de communication mobile (1) ;
une étape de transmission d'informations consistant à transmettre, par l'utilisation de moyens de transmission d'informations (203), des informations non livrées au dispositif mobile (30, 60), à condition que les moyens de détection de connexion (201) détectent que le dispositif mobile (30, 60) est dans un état communicable avec le réseau de communication mobile (1),
comprenant en outre :
une étape de transmission de notification effectuée pas des moyens de transmission de notification (202), consistant à transmettre des résultats de l'étape de détection de connexion et des informations relatives aux transmissions nécessaires pour transmettre des informations au dispositif mobile (30, 60), acquises par les moyens de détection de connexion, à un dispositif de transmission d'informations (10) pour transmettre des informations non livrées au dispositif mobile (30, 60) ;
une étape de transmission d'informations effectuée par des moyens de transmission d'informations (203) du dispositif de relais (20), consistant à sélectionner des informations non livrées à transmettre au dispositif mobile (30, 60) parmi des informations stockées dans des moyens de stockage d'informations de transmission (110), à condition qu'il ait été détecté par les moyens de détection de connexion (201) que le dispositif mobile (30, 60) est dans un état communicable avec le réseau, à ajouter les informations non délivrées sélectionnées en changeant un en-tête HTTP d'autres informations à transmettre au dispositif mobile (30, 60) par l'utilisation de HTTP, et à transmettre les informations non délivrées sélectionnées au dispositif mobile (30, 60) avec les autres informations ; et
une étape de réception de notification consistant à recevoir, par l'utilisation de moyens de réception de notification (103), le résultat détecté de l'étape de détection de connexion et les informations relatives aux transmissions nécessaires pour transmettre des informations au dispositif mobile (30, 60), acquises par les moyens de détection de connexion.
